Europäisches Patentamt

(19) **European Patent Office**

**Office européen des brevets**

(11) Publication number: **0 018 060**
**B1**

(12) **EUROPEAN PATENT SPECIFICATION**

(45) Date of publication of patent specification: **18.04.84**

(21) Application number: **80300262.5**

(22) Date of filing: **29.01.80**

(51) Int. Cl.³: **G 03 B 27/73,**
**G 03 G 15/01,**
**G 03 G 17/04, H 04 N 1/46,**
**G 02 F 1/05**

(54) **Electro-optical colour imaging apparatus.**

(30) Priority: **29.01.79 US 7283**

(43) Date of publication of application:
**29.10.80 Bulletin 80/22**

(45) Publication of the grant of the patent:
**18.04.84 Bulletin 84/16**

(84) Designated Contracting States:
**DE FR GB**

(56) References cited:
**DE - A - 2 557 254**
**DE - A - 2 711 194**
**DE - A - 2 809 997**
**DE - A - 2 820 965**
**DE - A - 2 824 825**
**DE - B - 2 623 741**
**FR - A - 2 346 737**
**US - A - 3 622 690**
**US - A - 3 783 185**
**US - A - 3 930 119**

**RESEARCH DISCLOSURE, No. 172, August 1978**
**"Electronic Imaging Apparatus Using Multicolor**
**Electrophotosensitive Particles"**

(73) Proprietor: **EASTMAN KODAK COMPANY**
**343 State Street**
**Rochester New York 14650 (US)**

(72) Inventor: **Mir, Jose Manuel**
**Kodak Park**
**Rochester New York (US)**

(74) Representative: **Blickle, K. Werner, Dipl.-Ing. et al,**
**KODAK AKTIENGESELLSCHAFT Postfach 369**
**D-7000 Stuttgart 60 (DE)**

Courier Press, Leamington Spa, England.

# Electro-optical colour imaging apparatus

The present invention relates to colour imaging apparatus for imagewise exposing a photosensitive layer with multicolour light to record thereon a multicolour image, said apparatus including electrooptical means for exposing the photosensitive layer so that said multicolour image is recorded one line at a time. The apparatus is highly useful for forming images in colour with photoelectrophoretic dispersions but has application to many other colour image forming processes, e.g., the exposure of silver halide emulsion layers.

Photoelectrophoretic migration image forming involves the imagewise exposure of a dispersion layer comprising photoconductive toner particles in a carrier medium located between two electrodes which provide a migration inducing field. In operation, the toner particles attain a charge and tend to migrate from the dispersion to one of the electrodes. Upon imagewise exposure of the dispersion, these particles which are illuminated tend to migrate to the other electrode.

Difficulties have arisen in efforts to commercialize such migration imaging systems. For example, high density images are difficult to attain.

For colour imaging in general, it is useful to have capabilities for colour adjustment without inserting filter elements and for image sense reversal without the formation of internegatives. Additionally, it is envisaged that office systems of the future will utilize electronic image transmission. Traditional optically-addressed copiers cannot accommodate such a future need.

European Patent Application No. 78200098.8 filed July 14, 1978, and published under No. 0000603 discloses a single exposure cycle, electronically-addressable photoelectrophoretic imaging apparatus comprising a pair of spaced electrode members and an illuminating means including a light source for uniformly exposing, at an imaging zone located between the electrode members, successive portions of a developer containing a mixture of photoconductive pigment particles of different colour types and respectively sensitive to light in different wavelength ranges. One of the electrode members comprises a plurality of separately addressable electrodes whereto respective electrical signals are applied whereby, upon coincidence of an energized condition of at least one of the addressed electrodes and light from the source, discrete particle migration fields are created between the electrode members. The illuminating means provides a series of time-separated light pulses synchronised with the imagewise energization of the addressed electrodes, each series including a plurality of pulses, at least one pulse in each series corresponding in wavelength to the sensitivity of one of the particle colour types. However, in certain applications of this published process, difficulties have been encountered with (1) unwanted electrical interactions at the imaging zone and (2) high voltage switching requirements.

In accordance with the present invention, said electrooptical means comprises a linear array of discrete electrooptical modulators, each being electrically addressable to transmit at least a part of light incident thereon to the photosensitive layer, illumination means for successively illuminating the whole array with a series of light pulses of different colours; and circuit means for electrically addressing said modulators concurrently so that the picture elements of each line of a colour separation image are formed concurrently.

In those embodiments of the invention adapted for imaging with a layer of developer containing electrophotosensitive particles, the apparatus is further characterized by an electrode means for forming generally uniform electrical fields across the photosensitive layer.

The invention is hereinafter described with reference to the accompanying drawings, in which:

Fig. 1 is a schematic diagram illustrating a preferred embodiment of a colour imaging apparatus of the present invention;

Fig. 2a is a schematic perspective view of an enlarged portion of the apparatus shown in Fig. 1;

Fig. 2b is a diagrammatic view of the portion of the apparatus shown in Fig. 2a;

Fig. 3 is a diagram illustrating light pulse energization of the apparatus of Fig. 1;

Fig. 4 is a schematic side view of an original scanning station for providing information to the apparatus of the present invention;

Fig. 5 is a schematic plan view of the scanning station shown in Fig. 4;

Fig. 6 is a perspective view of a modification of a portion of the apparatus shown in Fig. 1.

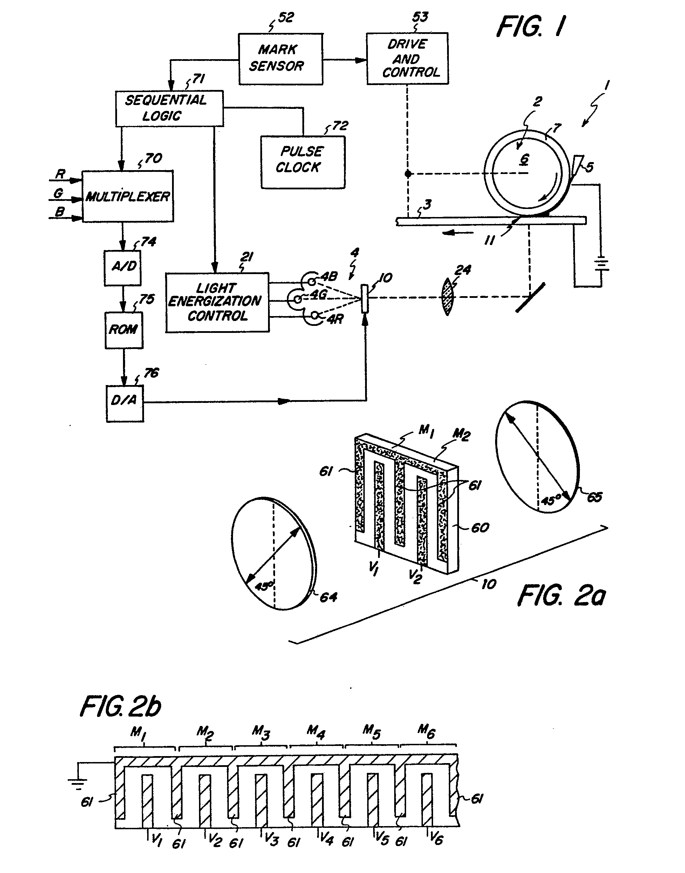

Referring to Fig. 1, a preferred embodiment of a colour imaging apparatus in accordance with the present invention, comprises an exposure station 1 including a cylindrical blocking electrode 2, a translating injecting electrode 3 and an electro-optical imaging device denoted generally 4. The blocking electrode 2 can be of a type known in the art and include for example, an electrically-conductive core 6 and an outer peripheral dielectric layer 7. The external surface of the layer 7 can be the surface on which the image is formed, and a toner image formed thereon can be transferred to a receiver sheet or fixed directly to the layer 7 (in the latter instance the layer 7 would normally be removably secured to the core 6). A supply means 5, such as an extrusion hopper, is provided for supplying a uniform imaging layer of developer mixture, e.g., a conventional photoelectrophoretic suspension, onto the electrode 2. The electrode 2 is mounted for rotation about a fixed axis at a position such that successive portions of its peripheral surface, i.e., the external surface of layer 7, pass an exposure zone 11.

The injecting electrode 3 is mounted for movement along a path such that successive transverse strip portions thereof pass the exposure station. The injecting electrode can be formed of transparent electrically-conductive material; however more often the electrode 3 is formed of a transparent support having a thin, transparent conductive layer on its upper surface. During imaging, a source of relatively high voltage is applied between the electrodes 2 and 3 to form a generally uniform, migration-inducing, electrical field across successive transverse strips of developer mixture at the exposure station.

It will be understood that the injecting and blocking electrode structure described above is conventional and that various forms of such electrodes are known in the art (e.g., two rotating cylinders). The present invention has utility with all or most such forms; its general operative requirements being that the electrodes present successive strips of developer in a migration field for imagewise exposure and surfaces to which the developer particles can migrate.

Referring now to Figs. 2a and 2b, as well as Fig. 1, the electro-optical imaging device 4 will be described. In general, this embodiment of the invention involves the concurrent imagewise illumination of pixels (very small elemental picture areas) of a strip of the suspension in the uniform electrical field between the electrodes. Such concurrent imagewise illumination involves subjecting the pixels in such strip to exposure seriatim by different coloured light pulses.

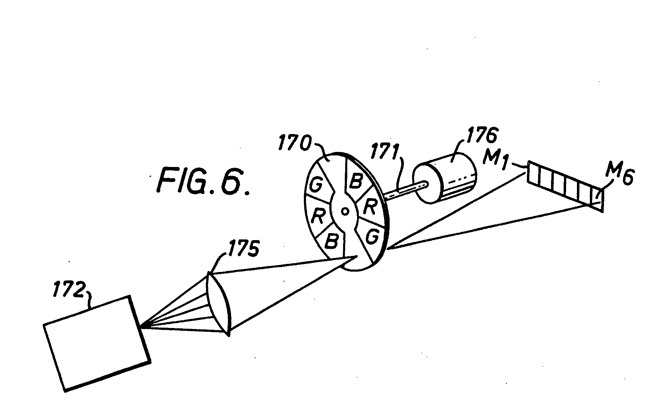

In the specific embodiment shown in Figs. 1, 2a and 2b, this function is accomplished by sequential energization of sources $4_R$, $4_G$ and $4_B$, and by the synchronized electrical control of a light modulating device 10. The sources $4_R$, $4_G$ and $4_B$ are preferably separate elongate electronic flash lamps, having appropriate filters, and being energized, e.g., by a light energization control device 21, to provide successive time-separated pulses of different wavelength radiations seriatim, e.g., red light, green light and blue light. It will be appreciated that other electromagnetic radiation in the visible or adjacent ranges can be utilized if the particles respond thereto and the term "light" is used herein to include all such radiation. Each source desirably includes means such as a reflector for directing illumination therefrom onto the electro-optical device 10. An alternative means for providing such series of time-separated pulses, preferred in some applications, is shown in Fig. 6 and described hereinafter.

As shown in more detail in Figs. 2a and 2b, the device 10 comprises a plurality of electro-optical modulators $M_1$—$M_6$ which are arranged in a linear array. (Each of the electrooptical modulators acts as a device of variable transmission depending upon an applied potential). As shown in Fig. 1, the lens 24 is positioned so that the electro-optical modulator array is imaged at the exposure station between the electrodes 2 and 3. The length of the array is selected and oriented so that its projected image, at the exposure zone 11, extends transversely across the electrode nip. That is, the projected array should extend a distance generally equal to the transverse dimension of the image to be formed. The size of the individual modulator members $M_1$—$M_6$ depends on the image resolution desired because the size of the light gates formed by the modulator, in connection with the lens magnification (reduction) power, determines the size of each pixel of the image formed. For example, an imaging device might comprise 200 such modulators per 25,4 mm across the width of an image to give high quality resolution.

The individual modulators are formed of electro-optical materials having controllably variable light modulating properties, e.g., transmittance or polarization, in response to changes in an electrical field applied thereacross. A particularly preferred structure schematically illustrated in Fig. 2a comprise a plate 60 of ferroelectric ceramic material, viz. lanthanum-doped lead zirconate titanate (PLZT), which exhibits birefringence that varies as a function of the electric field thereacross. On one major surface of the plate 60 are a plurality of interleaved, opaque electrodes, formed, e.g., of evaporated conducting material. The series of electrodes 61 which extend from a top edge of the plate can be coupled to a common reference potential, e.g., ground. The electrodes extending from the lower edge are individually addressable to separate voltage levels and designated $V_1$ to $V_6$ in Fig. 2b.

Light from sources $4_R$, $4_G$ and $4_B$ is transmitted to the plate 60 through polarizer 64 which is oriented, e.g., so that its direction of polarization is tilted 45° to the right of vertical and after passing plate 60 impinges on polarizer 65 which is oriented with its direction of polarization at right angles to that of polarizer 64, e.g., 45° to the left of vertical.

When there is no electric field applied on the plate 60 it is optically inactive (non birefringent) and thus no light from polarizer 64 is transmitted through crossed polarizer 65. Upon application of an electric field to one or more of the modulating zones $M_1$—$M_6$, by application of appropriate voltage to the respective electrodes $V_1$—$V_6$, the plate 60 becomes birefringent and rotates the direction of polarization of incident light by an extent dependent on the magnitude of the electric field. This results in transmission of light through polarizer 65, similarly as a function of the electric field.

The device 10 operates in the quadratic Kerr mode, the electric field being perpendicular to the transmitted light beam. However, PLZT materials may also be operated in a scattering mode where the electric field is applied parallel to the transmitted light beam.

Various electro-optical transducers using PLZT materials are known in the art, e.g., those disclosed in U.S. Patents 3,612,656; 3,998,523 and 4,053,207. Other electro-optical materials such as lithium niobate $(LiNbO_3)$, gadolinium molybdate $[Gd_2(MoO_4)_3]$, $Pb_5Ge_3O_{11}$, $Bi_4Ti_3O_{12}$ or various liquid crystal materials can also be utilized in certain applications of the present invention.

In the device shown in Fig. 2b, a few of the discrete light gate structures $M_1$—$M_6$ comprising device 10 are shown supported on a single chip. Thus when the electrode(s) $V_1$—$V_6$ are energized, the modulator zones $M_1$—$M_6$ will change optical state and transmit light directed thereon from sources $4_R$, $4_G$ and $4_B$ in accordance with their degree of energization. It will be appreciated that the linear modulator array could comprise a plurality of linear sub-arrays arranged end to end.

A brief description of the functions of the structure thus far described is believed useful before proceeding with the description of the portions of the apparatus which control such functions, bearing in mind that the exposing structure could be utilized equally well with other light-sensitive material such as photographic silver halide emulsion. To commence an imaging cycle, a continuous layer of photoelectrophoretic suspension is supplied at the imaging zone 11 between the blocking electrode 2 and the injecting electrode 3 by means of the extruding hopper 5 forming such a layer on the blocking electrode 2 as it rotates clockwise therepast. The electrode 3 is moved past the exposure station from right to left as viewed in Fig. 1 so that successive transverse strip portions of the electrodes' surfaces move past the exposure station with the layer of photoelectrophoretic suspension therebetween. With a voltage applied between the electrodes, the developer mixture therebetween is provided with a uniform electrical field which causes all the particles to move toward one electrode surface (here the injecting electrode 3). As previously indicated, the particles will remain at that electrode surface until activated by light of a colour to which they are sensitive.

Such activation is accomplished by electro-optical device 4. For purpose of explanation, the layer passing the exposure station 11 can be thought of as comprising a plurality of transverse strips or lines of width equal to the imaged width of the electro-optical elements M. Each transverse strip has a length equal to the imaged length of linear array of elements and can be considered as divided into a series of discrete segments, each defined by the projection of a portion of the respective element M onto the transverse band. Each such segment forms a pixel which, in accordance with the present invention can be subjected to individual colour separation imaging.

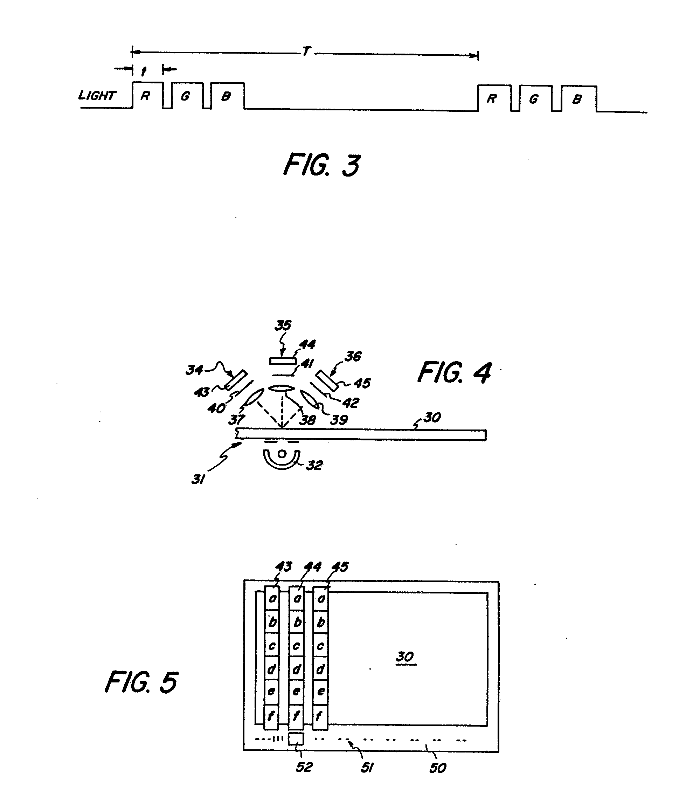

More specifically, referring to Fig. 3 in conjunction with Fig. 1, the time period during which each transverse strip passes through the exposure station is schematically denoted "T", the line period. Within each line period T, at least three separate sub-periods "t" occur, during each of which, each strip or line can be exposed to a successive pulse of light of a respective different wavelength, e.g., red, green and blue light from sources $4_R$, $4_G$ and $4_B$. The coincident occurrence, during an exposure sub-period $t$, of the electrical field and a light pulse will cause deposition of toner particles activated by that light wavelength on the aligned pixel of the blocking electrode 2. If no light pulse reaches the developer mixture during the sub-period, no particle deposition occurs.

Thus, if none of the electro-optical elements were activated (to pass light) during an entire imaging cycle, i.e., rotation of electrode 2 through one revolution and with synchronous movement of electrode 3 from a right hand position to a left hand position, no particles would be deposited on any pixel of electrode 2, even though the sources, $4_R$, $4_G$, $4_B$ provided their sequential exposure pulses during each of line periods T of the cycle. However, if all electro-optical elements were actuated during (and only during) the red pulse sub-period $t$ of each line period T in a copy cycle, only the photoconductive particles activated by the red light (e.g., cyan particles) would migrate to each pixel on the image electrode 2. Similarly if the elements were actuated during the red and green sub-periods, cyan and magenta particles would migrate to each pixel. If the elements were actuated during all three sub-periods the yellow particles would also migrate in response to the coincidence of field and blue light exposure.

Considering the foregoing, it will be appreciated that, by correct control of the time of actuation of each electro-optical element, in relation to the three sequential exposing light pulses $t$ which occur during each line period T, the tricolour photoelectrophoretic suspension can be caused to migrate to form a colour image.

Referring now to Figs. 4 and 5, an embodiment of a scanning station is illustrated for providing image information to address the elements of electro-optical device 10, in response to scanning of a colour original. As shown in Figs. 4 and 5, the original 30, e.g., a photographic colour negative transparency is moved past a scanning station 31. The scanning station comprises a panchromatic light source 32 on one side of the original 30 and separate photosensor systems 34, 35 and 36 located on the opposite side of the original. To provide colour separation information, each photosensor system respectively includes, a lens 37, 38 or 39, a colour filter 40, 41 or 42 and a photocell array 43, 44 or 45. The filter-photocell combination of each system is selected to provide information as to a different colour separation component of the portion of the original passing thereunder. For example, light from the lamp 32, colour modulated by the original 30, is focused by the lens 37 onto the photocell array 43 after passing through the filter 40. Assuming the system 34 to be a red colour information sensor, the filter 40 is a red filter and the photocell array 43 is red-light sensitive. The sensor system 35 and 36 can similarly be formed as green and blue information sensors respectively. As shown in Fig. 5, each of the photocell arrays 43, 44 and 45 respectively comprises a plurality of discrete photosensors 43a—f, 44a—f and 45a—f (corresponding in number to the number of modulator elements $M_1$—$M_6$ of the device 10) which detect colour information from respective pixels of the original, one line at a time.

As shown in Fig. 5, the original 30 is supported for movement past the photosensor system by a transparent platen 50 having timing marks 51 thereon. A detector 52 is supported in alignment with the path of movement of the timing marks, and includes e.g., a light source on one side of the platen 50 which directs light through the timing marks to a photocell on the other side. Similar detection marks are placed on electrodes 2 and/or 3 and the signals so derived are fed to a drive and control system 53, e.g., such as disclosed in U.S. Patent 4,044,248, for maintaining movement of the original and the electrodes in synchronism. It is essential that the blocking electrode 2 be moved in optical synchronism with the movement of the original and various synchronization techniques can be utilized to accomplish this result. In a preferred embodiment, the electrode 3 also is moved to provide zero relative velocity with respect to contiguous portions of electrode 2, however, this is not essential. It is of course necessary that the periods of energization and nonenergization of the elements $M_1$—$M_6$ be correctly related to the movement of the original 30 and the blocking electrode 3 and with respect to the three exposure pulses which occur during the line periods T of those elements.

For this purpose a control circuit such as disclosed in Fig. 1 can be provided. As indicated in that figure, the red, green and blue light intensity signals generated by the photosensor systems e.g., the signals from the photosensors 43a, 44a and 45a (Fig. 4) associated with a corresponding modulator e.g., $M_1$, are directed to the input terminals of a conventional multiplexer logic package 70. The multiplexer 70 is controlled by a sequential logic device 71 such as a shift register, counter or flip flop, which provides, sequentially, three digital selection signals that control respectively the output of the red, green and blue light intensity signals from the multiplexer 70. A pulse clock 72 provides a series of synchronizing timing pulses to the device 71 which resets to an inactive condition after each series of red, green and blue outputs and remains inactive until the mark detector 52 signals the commencement of another output of colour information for the next successive line of the original. As shown, the device 71 also provides sequential digital signals to the light energization control device 21 to control sequential actuation of the red, green and blue sources in synchronism with the red, green and blue colour information output from the multiplexer 70.

Upon output from the multiplexer 70, the analog signal representative of e.g. the red light intensity of a pixel of the original 30, is converted by an analog-to-digital converter 74 to a digital signal representative of the range of intensity within which the signal resides. This red intensity digital signal addresses a read only memory 75 which, in response, provides to a digital-to-analog converter 76, a digital signal indicative of the appropriate voltage to be impressed on the corresponding light modulator during the red light $t$. That is, the extent of cyan particle deposition on the blocking electrode 2 is a function of intensity of exposure of the photoelectric suspension. Therefore, a tone scale for each colour component can be provided by varying the voltage across an element M which, in turn, controls the extent of light transmission through the element and thus the intensity of illumination of the pixel at the exposure zone.

Upon receipt of the next clock pulse, the green light intensity signal is fed out from the multiplexer 70 through the conversion circuitry, in synchronism with actuation of the green illumination source. Similarly, in response to the third clock pulse, the blue light signal is initiated; and the next subsequent clock pulse resets the device 71 to its initial condition, awaiting initiation of another activating sequence by the mark detector 52, when the original has been advanced another line.

It will be appreciated that, for concurrent sensing and exposure of each pixel, signal processing and timing circuitry described above will exist for each aligned R, G and B photosensor set and its corresponding electro-optical modulator element i.e., 43a, 44a, 45a and $M_1$ ... 43f, 44f, 45f and $M_6$. Also it will be understood that the colour information of a particular type, e.g., red, green or blue, is transmitted concurrently to each pixel in a given line. That is, first the output of photosensors 43a—f will transmit the red information to the elements $M_1$—$M_6$ in synchronism with the red light pulse from the source $4_R$, then the sensors 44a—f will transmit green information to the

elements $M_1$—$M_6$ during the green light line exposure, and then the sensors 45a—f will transmit the blue information to the elements $M_1$—$M_6$ during the blue exposure. When this tricolour exposure sequence has been completed for each line of the original, a copy sequence is complete.

As an example of typical parameters, at an electrode speed of 50.8 mm per second and with an electrode spacing of 10 electrodes per m.m., light exposures of up to 100 ergs/cm² can be used for image forming, and the voltages applied to the modulators can be in the range of 0—200 volts. The expression "10 electrodes per mm" refers to the number of electrically addressable electrodes ($V_1$ to $V_6$) per mm of light valve array shown in Fig. 2b.

It will be apparent that the cumulative time for each series of three exposure periods $t$ must not exceed the line period T, which will be equal to the exposure station width "W" divided by the velocity "V" of the imaged electrode surface. It is preferable, to obtain good colour overlap, that $t<<W/V$. This can be accomplished by proper selection of the clock pulse rate in conjunction with the rate of movement of the electrode 2. For corresponding longitudinal resolution W would be of the order of 0.1 m.m.

Although the invention has been described in respect to a particular embodiment it will be appreciated that significant modifications and a wide variety of alternative structures can be utilized in the practice of the present invention.

For example with proper signal delay and signal amplifying circuitry the analog signals from the photocells could be fed direct to the electrodes $V_1$—$V_6$ without conversion to digital form. Also, in certain embodiments of the invention, tone scale might not be required and the read only memory and related digital-to-analog converting circuitry could be eliminated. Further, if desired certain colour correction functions could be effected by detecting qualities of the sensed original intensity signals, electronically comparing those signals and providing compensation processing for the signals fed out to the electro-optical elements.

Other devices and modes can be used for achieving a colour tone variation, or grey scale, if desired. For example, for off-on type electro-optical elements as opposed to variable density elements, the electro-optical elements can be energized, during each pixel exposure period, for each colour of light, according to length of time exposure. That is, if a low density red component is desired for a pixel, the element be switched "on" (i.e., transmitting light of fixed intensity) only for 10% of the time during that particular red light exposure period for the pixel. Similarly, if a high red density was desired the time might be, e.g., 90% of the total red light exposure period. Similarly, a stepped voltage signal may be fed to the elements during each pixel colour exposure period and the elements selectively addressed by the colour information signal during the stage of the exposure period at which the element is at the desired voltage level.

The illumination source could also take alternative forms. For example, as shown in Fig. 6, chopped pulses could be provided by rotating a filter-disk 170, having red, green and blue light filter sections, on a shaft 171 sequentially to intersect a convergent zone in the path of the beam of a panchromatic light from source 172 directed to modulators $M_1$—$M_6$ by e.g., cylindrical condenser lens 175. The rotation of the filter-disk 170 can be controlled or, preferably, sensed by a shaft encoder 176 and thus synchronization with respect to the address of the electrodes and movement of the imaged material can be achieved.

It is emphasized that although the invention has been described herein with respect to photoelectrophoretic migration imaging, for which it is particularly useful, it will readily be appreciated that it has broad application to printing using many other photo-sensitive colour imaging materials, e.g., photo-graphic films or papers.

It will be apparent to one skilled in the art that the various sub-systems disclosed in Fig. 1 and Fig. 6 can be interchanged and further that various other equivalent structures can be utilized in lieu of structure specifically disclosed herein.

It can also be arranged for the information derived by the scanner to be transmitted sequentially to the printer by using appropriate electronic means thereby enabling single line long distance image transmissions.

The above-described apparatus can be used industrially as a colour copier. More specifically, the apparatus can be used industrially as an electronically addressed colour copier having an image transmission capability that is relatively simple in design and yet which can produce quality images rapidly.

**Claims**

1. Colour imaging apparatus for imagewise exposing a photosensitive layer with multicolour light to record thereon a multicolour image, said apparatus including electrooptical means (4, 10) for exposing the photosensitive layer so that said multicolour image is recorded one line at a time, characterized in that said electrooptical means (4, 10) comprises a linear array of discrete electrooptical modulators ($M_1$—$M_6$), each being electrically addressable to transmit at least a part of light incident thereon to the photosensitive layer, illumination means (21, 4B, 4G, 4R) for successively illuminating the whole array with a series of light pulses of different colours; and circuit means (70—75) for electrically addressing said modulators concurrently so that the picture elements of each line of a colour separation image are formed concurrently.

2. An apparatus as claimed in claim 1 wherein the illumination means comprises three different wavelength sources, the photosensitive material being responsive to radiation from the sources to produce a three colour image, characterized in that the sources (4B, 4G, 4R) are arranged to emit radiation to the modulators ($M_1$—$M_6$) seriatim in synchronism with the address of image information, corresponding to the wavelength of the source, to the modulators.

3. An apparatus as claimed in claim 2 wherein each source is an electronic flash tube (4B, 4G, 4R) appropriately filtered, characterized in that trigger means (71, 72) are provided to trigger each flash tube in synchronism with the address of corresponding image information to the modulators ($M_1$—$M_6$).

4. An apparatus as claimed in claim 1, 2 or 3 characterized in that each electro-optical modulator ($M_1$—$M_6$) includes an electrically addressable PLZT ceramic material (60) and cooperating light polarizing means (64, 65).

5. An apparatus as claimed in claim 1 wherein the illumination means comprises a rotatable filter (170) having transmission regions arranged to pass radiation of three different wavelengths from a panchromatic source (172) characterized in that synchronising means (176) are provided for synchronising the address of the modulators ($M_1$—$M_6$) of image information corresponding to a particular wavelength when the filter (170) is transmitting radiation of that wavelength.

6. An apparatus as claimed in any preceding claim wherein an exposure station (1) comprises a pair of electrodes (2, 3) and the photosensitive material comprises a photoelectrophoretic suspension (5) therebetween, at least one of the electrodes (3) being translatable relative to an exposure zone (11) of the station, characterized in that a uniform electrical field is applied between the electrodes (2, 3).

## Revendications

1. Appareil de présentation d'images en couleurs, pour exposer une couche photosensible à une image en plusieurs couleurs de lumière de manière à y enregistrer une image multicolore, cet appareil comprenant un moyen électro-optique (4, 10) pour exposer la couche photosensible de manière que cette image multicolore soit enregistrée ligne par ligne, caractérisé en ce que ce moyen électro-optique (4, 10) comprend une file rectiligne de modulateurs électro-optiques discrets ($M_1$—$M_6$), chacun étant électriquement adressable pour transmettre vers la couche photosensible au moins une partie de la lumière qu'il reçoit, un moyen d'éclairage (21, 4B, 4G, 4R) pour éclairer successivement toute la file avec une série d'impulsions lumineuses de diverses couleurs, et un moyen de circuit (70—75) pour adresser électriquement ces modulateurs concurremment, de manière que les éléments d'image de chaque ligne d'une image de sélection de couleur soient formés concurremment.

2. Appareil conforme à la revendication 1, dans lequel le moyen d'éclairage comprend trois sources de longeurs d'onde différentes, le produit photosensible étant sensible au rayonnement de ces sources pgur former une image trichrome, caractérisé en ce que les sources (4B, 4G, 4R) sont disposées pour rayonner successivement vers les modulateurs ($M_1$—$M_6$), en synchronisme avec l'envoi des informations d'images, correspondant à la longueur d'onde de la source, aux modulateurs.

3. Appareil conforme à la revendication 2, dans lequel chaque source est un tube à éclair électronique (4B, 4G, 4R) convenablement filtré, caractérisé en ce que des moyens de déclanchement (71, 72) sont prévus pour actionner chaque tube en synchronisme avec l'envoi des informations d'images correspondantes, aux modulateurs ($M_1$—$M_6$).

4. Appareil conforme à l'une des revendications 1, 2 ou 3, caractérisé en ce que chaque modulateur électro-optique ($M_1$—$M_6$) comprend un matériau céramique PLZT (60) électriquement adressable et un moyen coopérant de polarisation de la lumière (64, 65).

5. Appareil conforme à la revendication 1, dans lequel le moyen d'éclairage comprend un filtre rotatif (170) comprenant des zones de transmission agencées pour transmettre des rayonnements de trois longueurs d'onde différentes, à partir d'une source panchromatique (172), caractérisé en ce qu'il comprend des moyens de synchronisation (176) pour synchroniser l'envoi aux modulateurs ($M_1$—$M_6$) d'informations d'image correspondant à une longueur d'onde particulière, quand le filtre (170) transmet un rayonnement de cette longueur d'onde.

6. Appareil conforme à l'une quelconque des revendications précédentes, dans lequel le poste d'exposition (1) comprend une paire d'électrodes (2, 3) et dans lequel le produit photosensible est constitué par une suspension photoélectrophorétique (5) placée entre les électrodes, l'une (3) au moins des électrodes étant mobile en translation par rapport à une zone d'exposition (11) du poste d'exposition, caractérisé en ce qu'un champ électrique uniforme est appliqué entre les électrodes (2, 3).

## Patentansprüche

1. Farbabbildungsgerät für die bildmäßige Belichtung einer lichtempfindlichen Schicht mit Licht unterschiedlicher Farben zum Aufzeichnen eines mehrfarbigen Bildes auf dieser Schicht, wobei dieses Gerät elektro-optische Mittel (4, 10) enthält, mit denen die lichtempfindliche Schicht derart belichtet wird, daß das mehrfarbige Bild Zeile für Zeile aufgezeichnet wird, dadurch gekennzeichnet, daß die elektrooptischen Mittel (4, 10) eine lineare Anordnung diskreter elektro-optischer Modulatoren ($M_1$—$M_6$) aufweisen, von denen jeder elektrisch so ansteuerbar ist, daß er mindestens einen Teil des auf ihn fallenden Lichts zu der lichtempfindlichen Schicht durchläßt, sowie eine Beleuchtungseinrichtung (21, 4B, 4G, 4R), mit der die gesamte Anordnung nacheinander mit einer Reihe von Lichtimpulsen unterschiedlicher Farben beleuchtet wird, und Schaltungsmittel (70—75), mit denen die Modulatoren gleichzeitig angesteuert werden, derart, daß die Bildelemente jeder Zeile eines Farbauszugsbildes jeweils gleichzeitig erzeugt werden.

2. Gerät nach Anspruch 1, bei dem die Beleuchtungseinrichtung drei Lichtquellen für Licht verschiedener Wellenlängen aufweist und bei dem in dem lichtempfindlichen Material unter der Wirkung der Strahlung der Lichtquellen ein dreifarbiges Bild erzeugt wird, dadurch gekennzeichnet, daß die Lichtquellen (4B, 4G, 4R) so angeordnet sind, daß sie die Modulatoren ($M_1$—$M_6$) nacheinander mit Strahlung beaufschlagen, wobei die Beaufschlagung synchron mit der Ansteuerung der Modulatoren durch Bildinformationen entsprechend der Wellenlänge der Lichtquelle erfolgt.

3. Gerät nach Anspruch 2, bei dem jeder der Lichtquellen aus einer in geeigneter Weise mit Filtern versehenen elektronischen Blitzröhre (4B, 4G, 4R) besteht, dadurch gekennzeichnet, daß Auslösemittel (71, 72) vorgesehen sind, um jede Blitzröhre synchron mit der Ansteuerung

der Modulatoren ($M_1$—$M_6$) durch entsprechende Bildinformationen auszulösen.

4. Gerät nach Anspruch 1, 2 oder 3, dadurch gekennzeichnet, daß jeder elektro-optische Modulator ($M_1$—$M_6$) eine elektrische ansteuerbares Keramikmaterial vom Typ PLZT (60) (lanthan-dotiertes Bleizirkonattitanat) und damit zusammenwirkende Lichtpolarisationsmittel (64, 65) enthält.

5. Gerät nach Anspruch 1, bei dem die Beleuchtungseinrichtung ein drehbares Filter (170) aufweist, in dem durchlässige Bereiche derart angeordnet sind, daß von einer panchromatischen Strahlungsquelle (172) ausgehende Strahlung mit drei verschiedenen Wellenlängen durch sie hindurchgeht, dadurch gekennzeichnet, daß Synchronisierungsmittel (176) zum Synchronisieren der Ansteuerung der Modulatoren ($M_1$—$M_6$) durch die Bildinformationen entsprechend einer bestimmten Wellenlänge vorgesehen sind, wenn das Filter (170) Strahlung dieser Wellenlänge durchläßt.

6. Gerät nach einem der vorhergehenden Ansprüche, bei dem eine Belichtungsstation (1) mit zwei Elektroden (2, 3) vorgesehen ist und das Lichtempfindliche Material aus einer zwischen den Elektroden angeordneten photoelektrophoretischen Suspension (5) besteht, wobei mindestens eine der Elektroden (3) relativ zu einer Belichtungszone (11) der Belichtungsstation quer beweglich ist, dadurch gekennzeichnet, daß zwischen den Elektroden (2, 3) ein gleichförmiges elektrisches Feld erzeugt wird.

FIG. 1

MARK SENSOR *52*

DRIVE AND CONTROL *53*

SEQUENTIAL LOGIC *71*

PULSE CLOCK *72*

MULTIPLEXER *70*

R
G
B

A/D *74*

ROM *75*

D/A *76*

LIGHT ENERGIZATION CONTROL *21*

*4B*
*4G*
*4R*
*4*

*10*

*24*

*1*
*2*
*7*
*6*
*5*
*3*
*11*

FIG. 2a

*M₁* *M₂*
*61*
*61*
*60*
*V₁* *V₂*
*10*
*65*
*64*
45°
45°

FIG. 2b

*M₁* *M₂* *M₃* *M₄* *M₅* *M₆*

*61*
*61*

*V₁* *61* *V₂* *61* *V₃* *61* *V₄* *61* *V₅* *61* *V₆*

**FIG. 3**

**FIG. 4**

**FIG. 5**

FIG.6.